# EUROPÄISCHE PATENTSCHRIFT

(11) **EP 3 433 321 B1**
(45) Veröffentlichungstag und Bekanntmachung des Hinweises auf die Patenterteilung: **22.05.2019**
(21) Anmeldenummer: 17708815.0
(22) Anmeldetag: 06.03.2017
(51) Int. Cl.: C08L 83/08, C09D 183/08

(54) **VERNETZBARE MASSEN AUF DER BASIS VON ORGANOSILICIUMVERBINDUNGEN**
CROSS-LINKABLE MASSES BASED ON ORGANOSILICON COMPOUNDS
MASSES RÉTICULABLES À BASE DE COMPOSÉS ORGANOSILICIÉS

(43) Veröffentlichungstag der Anmeldung: 30.01.2019
(73) Patentinhaber: Wacker Chemie AG, 81737 München (DE)
(72) Erfinder: SCHEIM, Uwe, 01640 Coswig (DE); ACKERMANN, Hartmut, 84489 Burghausen (DE); STANJEK, Volker, 84539 Ampfing (DE)
(74) Vertreter: Budczinski, Angelika
(86) Internationale Anmeldenummer: PCT/EP2017/055210
(87) Internationale Veröffentlichungsnummer: WO 2018/162033

(56) Entgegenhaltungen:
- US-A1- 2009 234 071
- US-A1- 2009 293 768

## Beschreibung

Die Erfindung betrifft vernetzbare Massen auf der Basis von Organosiliciumverbindungen, Verfahren zu deren Herstellung sowie deren Verwendung, insbesondere zur Beschichtung und Behandlung von Oberflächen gegen Verschmutzung.

Unter Ausschluss von Wasser lagerfähige, bei Zutritt von Wasser bei Raumtemperatur zu Elastomeren vulkanisierende Einkomponenten-Systeme (RTV-1) sind seit langem bekannt. Diese Produkte werden in großen Mengen zum Beispiel in der Bauindustrie, eingesetzt, u.a. auch als Beschichtungen. Die Basis dieser Mischungen sind Polymere, die durch Silylgruppen terminiert sind, die reaktive Gruppen, wie zum Beispiel Alkoxygruppen, tragen. Des Weiteren können diese Systeme Füllstoffe, Weichmacher, Vernetzer, Katalysatoren sowie Additive enthalten. Die Produkte sind in der Regel jedoch nicht fließfähig. Eine Fließfähigkeit kann man zwar durch Zusatz von großen Mengen Vernetzer und Lösungsmittel erreichen. Nachteil solcher Systeme ist jedoch, dass sie eine große Schrumpfung bei der Aushärtung aufweisen können, insbesondere dann, wenn größere Mengen an Vernetzer eingesetzt werden. Die großen Mengen an Vernetzer, gegebenenfalls auch in Kombination mit Lösungsmittel kann zu Rissbildung bei der Aushärtung führen oder auch zu Verformung der Oberfläche ("Orangenhaut").

Verunreinigungen, wie Graffiti und wildes Plakatieren, verursachen Jahr für Jahr hohe Schäden. Von Graffiti betroffen sind vor allem Wände, Mauern und Schienenfahrzeuge, aber auch kleinere Objekte wie Verteilerkästen und Verkehrsschilder. Verfahren zur Entfernung solcher Verunreinigungen sind bereits bekannt. Hierbei soll beispielsweise auf EP-A 552 773 sowie WO 98/38257 verwiesen werden. US2009/0293768 A1 offenbart flüssige Organosiloxan-Zusammensetzungen für u.a. Anti-Graffiti-Anwendungen enthaltend alkoxyfunktionelle Organosiloxane, einen organometallischen Katalysator, eine aminofunktionelle Siliciumhaltige Verbindung und eine Glycidylgruppen-enthaltende Verbindung. Die meisten existierenden Anti-Graffiti-Systeme bilden auf dem zu schützenden Untergrund einen durchgehenden Film, der sämtliche Poren des Untergrunds verschließt und als Trennschicht zwischen dem Substrat und der aufgesprühten Farbe wirkt. Diese Trennschicht sorgt dafür, dass die aufgesprühte Farbe nicht in die Poren des Untergrunds eindringt und somit schlecht auf dem Untergrund haftet und sich daher leicht wieder entfernen lässt. Meist kann das Graffiti in einem Reinigungsverfahren mit einem geeigneten Reinigungsmittel abgewaschen werden.

Hinsichtlich der Dauerhaftigkeit der Graffitiprophylaxe werden temporäre, semipermanente und permanente Systeme unterschieden. Kriterium ist dabei, wie sich die Trennschicht beim Abwaschen des Graffitis verhält. Bleibt sie vollständig erhalten und übersteht sie mindestens 15 Sprüh-Attacken samt nachfolgenden Reinigungsprozessen, gilt das System als permanent. Wird die Schutzschicht dagegen zusammen mit dem Graffiti abgewaschen, spricht man von einem temporären System oder einer Opferschicht. Semipermanente Systeme liegen in der Beständigkeit zwischen den beiden Extremen.

Der Schutzfilm temporärer Systeme besteht meist aus Wachsen, Biopolymeren oder Acrylaten. Diese Materialien behindern den Transport von Wasserdampf aus dem Untergrund zur Umgebungsluft nicht und sind unsichtbar, weshalb sie auch auf denkmalgeschützten Bauten eingesetzt werden können. Ihr Nachteil besteht darin, dass der Schutzfilm nach der Abreinigung des Graffitis vollständig erneuert werden muss und selbst ohne Graffiti-Attacke nur wenige Jahre hält.

Bei semipermanenten Beschichtungen geht im Allgemeinen nicht die gesamte Trennschicht, sondern nur eine Schichtkomponente bei der Abreinigung verloren. Nach jeder Graffiti-Entfernung und im Turnus von drei bis fünf Jahren muss der Untergrund erneut behandelt werden. Vorteilhaft ist, dass sich semipermanente Beschichtungen mit dem Auge kaum wahrnehmen lassen und dass sie durchlässig für Wasserdampf sind. Eingesetzt werden oftmals Mischungen aus organischen Wachsen, Silanen und Siloxanen. Allerdings weisen diese Beschichtungen letztendlich denselben Nachteil auf wie die temporären Systeme, auch wenn die Zeiträume zwischen zwei Neubeschichtungen etwas größer sind. Insbesondere zum Schutz von regelmäßig von Graffiti betroffenen Oberflächen sind sie nicht oder nur sehr bedingt geeignet.

Der große Vorteil von permanenten Anti-Graffiti-Systemen liegt darin, dass sie nach der Graffiti-Abreinigung intakt bleiben und viele Jahre halten, ohne ihre Schutzwirkung zu verlieren. Nachteilig ist, dass sie meist das Aussehen des Untergrunds verändern. Zudem sind die Schichten bei vielen herkömmlichen permanenten Systemen so dicht, dass Wasserdampf nicht hindurchdringen kann. Befindet sich solch eine diffusionshemmende Beschichtung auf einem feuchten Untergrund, kann die Feuchtigkeit nicht entweichen. In der Folge kann es zu einer stellenweisen Ablösung des Schutzfilms kommen. Auch Feuchtigkeitsschäden an der Bausubstanz sind möglich.

Überraschenderweise wurde gefunden, dass die nachfolgend beschriebenen Massen sich hervorragend eignen permanente Anti-Graffiti-Beschichtungen zu erzeugen. Die Beschichtungen haben überraschend gute Haftung zum Untergrund auch ohne Vorbehandlung durch Primer, trotzdem haften die Graffiti schlecht auf der Beschichtung und können daher leicht entfernt werden, ohne dass die Beschichtung selber angegriffen wird.

Gegenstand der Erfindung sind vernetzbare Massen enthaltend
(A) Organosiloxane bestehend aus Einheiten der Formeln

   R_{c}SiO_{4-c/2} (I)

   und

   R⁵ (OR⁴)ₘSiO_{3-m/2} (II),

   wobei
   **R** gleiche oder verschiedene, einwertige, gegebenenfalls substituierte Kohlenwasserstoffreste bedeutet,
   **R⁴** gleich oder verschieden sein kann und einwertige, gegebenenfalls substituierte Kohlenwasserstoffreste bedeutet,
   **R⁵** eine Gruppe -CH₂-NR²R³ bedeutet,
   **R²** Wasserstoffatom oder einen einwertigen, gegebenenfalls substituierten linearen oder verzweigten Kohlenwasserstoffrest mit 1 bis 6 Kohlenstoffatomen bedeutet,
   **R³** einen einwertigen, gegebenenfalls substituierten linearen oder verzweigten Kohlenwasserstoffrest mit 1 bis 6 Kohlenstoffatomen oder einen cyclischen gesättigten Kohlenwasserstoffrest mit 5 oder 6 Kohlenstoffatomen oder Phenylrest bedeutet,
   **c** gleich 1 oder 2, bevorzugt 2, ist und
   **m** gleich 0, 1 oder 2, bevorzugt 2, ist,
   mit der Maßgabe, dass pro Molekül mindestens zwei Reste R⁵ sowie mindestens vier Gruppen (OR⁴) anwesend sind,
(B) Silane der Formel

   R⁵Si(OR⁴)₃ (III)

   und/oder deren Teilhydrolysate
   in Mengen von 5 bis 20 Gewichtsteilen, bezogen auf 100 Gewichtsteile Komponente (A),
(C) Organosiloxane bestehend aus Einheiten der Formel

   R⁶ₐ(R⁷O)_{b}SiO_{(4-a-b)/2} (IV),

   worin
   **R⁶** gleich oder verschieden sein kann und einen einwertigen, SiC-gebundenen, gegebenenfalls mit Halogenatom substituierten Kohlenwasserstoffrest oder Si-gebundenes Halogenatom bedeutet,
   **R⁷** gleich oder verschieden sein kann und einen einwertigen, gegebenenfalls substituierten Kohlenwasserstoffrest bedeutet,
   **a** 0 oder 1 ist und
   **b** 0, 1, 2 oder 3 ist,
   mit der Maßgabe, dass in Formel (IV) die Summe a+b<4 ist, das Organosiloxan 2 bis 30 Einheiten der Formel (IV) aufweist und pro Molekül mindestens eine Einheit mit b verschieden 0 anwesend ist,
   in Mengen von 1 bis 30 Gewichtsteilen, bezogen auf 100 Gewichtsteile Komponente (A),
(D) Organosiliciumverbindungen enthaltend Einheiten der Formel

   D_{f}Si (OR⁹)ₑR⁸_{d}O_{(4-d-e-f)/2} (V),

   worin
   **R⁸** gleich oder verschieden sein kann und einen einwertigen, gegebenenfalls substituierten, SiC-gebundenen, von Stickstoff freien organischen Rest bedeutet,
   **R⁹** gleich oder verschieden sein kann und Wasserstoffatom oder gegebenenfalls substituierte Kohlenwasserstoffreste bedeutet,
   **D** gleich oder verschieden sein kann und einen einwertigen, SiC-gebundenen Rest mit mindestens einem nicht an eine Carbonylgruppe (C=O) gebundenen Stickstoffatom bedeutet, **d** 0 oder 1, bevorzugt 0, ist,
   **e** 0, 1, 2 oder 3, bevorzugt 1, 2 oder 3, besonders bevorzugt 3, ist und
   **f** 0 oder 1, bevorzugt 1, ist,
   mit der Maßgabe, dass die Summe aus d+e+f kleiner oder gleich 4 ist, pro Molekül mindestens ein Rest D anwesend ist und pro Molekül mindestens ein Rest D eine NH₂-Gruppe trägt,
   in Mengen von 0,1 bis 2 Gewichtsteilen, bezogen auf 100 Gewichtsteile Komponente (A).

Beispiele für Reste R und R⁶ sind jeweils unabhängig voneinander Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R und R⁶ sind jeweils unabhängig voneinander Halogenalkylreste, wie der 3,3,3-Trifluorprop-1-ylrest, der 1,1,1,3,3,3-Hexafluorprop-2-ylrest und der Heptafluorprop-2-ylrest.

Bevorzugt handelt es sich bei Rest R um gegebenenfalls mit Halogenatomen substituierte, einwertige Kohlenwasserstoffreste mit 1 bis 18 Kohlenstoffatomen, besonders bevorzugt um Alkylreste, insbesondere um den Methylrest.

Bevorzugt handelt es sich bei Rest R⁶ um unsubstituierte lineare oder verzweigte Alkylgruppen mit 1 bis 8 Kohlenstoffatomen, besonders bevorzugt um Methyl-, Ethyl-, Vinyl-, n-Octyl- oder 2,4,4-Trimethylpentylrest.

Beispiele für Rest R⁸ sind die für R angegebenen Reste.

Bevorzugt handelt es sich bei Rest R⁸ um einwertige Kohlenwasserstoffreste mit 1 bis 18 Kohlenstoffatomen, besonders bevorzugt um Alkylreste, insbesondere um den Methylrest.

Beispiele für Reste R⁴, R⁷ und R⁹ jeweils unabhängig voneinander sind die für R angegebenen Reste.

Bevorzugt handelt es sich bei Rest R⁴ und R⁷ jeweils unabhängig voneinander um Alkylreste mit 1 bis 6 Kohlenstoffatomen, besonders bevorzugt um den Methyl- oder Ethylrest.

Bevorzugt handelt es sich bei Rest R⁹ um Wasserstoffatom oder Alkylreste mit 1 bis 6 Kohlenstoffatomen, besonders bevorzugt um den Methyl- oder Ethylrest.

Beispiele für Kohlenwasserstoffreste R² sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest.

Bevorzugt handelt es sich bei Rest R² um Wasserstoffatom, Methyl-, Ethyl-, n-Propyl- oder 1-n-Butylrest, besonders bevorzugt um den Ethyl- oder 1-n-Butylrest, insbesondere um den n-Butylrest.

Beispiele für R³ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Cycloalkylreste, wie der Cyclopentyl- und Cyclohexylrest; sowie der Phenylrest.

Bevorzugt handelt es sich bei Rest R³ um Methyl-, Ethyl-, n-Propyl-, 1-n-Butyl- oder Cyclohexylrest, besonders bevorzugt um Ethyl-, n-Butyl- oder Cyclohexylrest, insbesondere um den n-Butylrest.

Bevorzugt haben die Reste R² und R³ die gleiche Bedeutung.

Beispiele für R⁵ sind N,N-Dimethylaminomethyl-, N,N-Diethylaminomethyl-, N,N-Di-n-propylaminomethyl-, N,N-Di-n-butylaminomethyl-, N-Methyl-N-ethylaminomethyl-, N-Methyl-N-n-propylaminomethyl-, N-Methyl-N-n-buytlaminomethyl-, N-Ethyl-N-n-propylaminomethyl-, N-Ethyl-N-n-butylaminomethyl-, N-n-Propyl-N-n-buytlaminomethyl-, N-Methylaminomethyl-, N-Ethylaminomethyl-, N-n-propylaminomethyl-, N-Prop-2-ylaminomethyl-, N-n-Butylaminomethyl-, N-But-2-ylaminomethyl-, N-Cyclopentylaminomethyl- und N-Cyclohexylaminomethylrest.

Bevorzugt handelt es sich bei Rest R⁵ um N,N-Dimethylaminomethyl-, N,N-Diethylaminomethyl-, N,N-Di-n-propylaminomethyl-, N,N-Di-n-butylaminomethyl-, N-n-Butylaminomethyl-, N-But-2-ylaminomethyl-, N-Cyclopentylaminomethyl- oder N-Cyclohexylaminomethylrest, besonders bevorzugt um N,N-Dimethylaminomethyl-, N,N-Diethylaminomethyl-, N,N-Di-n-propylaminomethyl-, N,N-Di-n-butylaminomethylrest, insbesondere um den N,N-Di-n-butylamino-methylrest. Erfindungsgemäß eingesetzte Siloxane (A) sind bereits bekannt und können beispielsweise durch Umsetzung von α,ω-Dihydroxy-Diorganopolysiloxanen (A0) mit Silanen der Formel (III) hergestellt werden. Falls erwünscht, kann die Herstellung der Komponente (A) auch bei der Herstellung der erfindungsgemäßen Zusammensetzungen in situ erfolgen. Bevorzugt handelt es sich bei den zur Herstellung der erfindungsgemäß eingesetzten Komponente (A) verwendeten α,ω-Dihydroxy-Diorganopolysiloxanen (A0) um solche mit einem Molekulargewicht Mn von bevorzugt kleiner 45 000 g/mol, besonders bevorzugt kleiner 40 000 g/mol, insbesondere kleiner 35 000 g/mol, ganz besonders bevorzugt kleiner als 30 000 g/mol.

Bei den in den erfindungsgemäß eingesetzten Siloxanen (A) enthaltenen Einheiten der Formel (I) handelt es sich bevorzugt im Wesentlichen um solche mit c=2. Herstellungsbedingt können die Siloxane (A) auch Einheiten der Formel (I) mit c gleich 1 enthalten. Bevorzugt enthalten die erfindungsgemäß eingesetzten Siloxane (A) pro Molekül maximal eine Einheit der Formel (I) mit c gleich 1, besonders bevorzugt keine.

Bevorzugt handelt es sich bei den erfindungsgemäß eingesetzten Siloxanen (A) um solche der Formel

[(R⁴O)₂R⁵SiO-(Si^{R}₂O)ₙ-]ₒ(OR⁴)₂₋ₒR⁵SiO-(SiR₂O)ₙ-SiR⁵(OR⁴)₂₋ₒ[O-(SiR₂O)ₙ -SiR⁵(OR⁴)₂]ₒ (VI),

wobei
∘ gleich oder verscheiden sein kann und 0, 1 oder 2 bedeutet und
n gleich oder verscheiden sein kann und eine ganze Zahl von 10 bis 600 ist.

Bevorzugt haben in Formel (VI) die Segmente -(SiR₂O)ₙ- jeweils unabhängig voneinander ein Molekulargewicht Mn kleiner 45 000 g/mol, besonders bevorzugt kleiner als 40 000 g/mol, insbesondere kleiner 35 000 g/mol, ganz besonders bevorzugt kleiner als 30 000 g/mol auf.

Beispiele für erfindungsgemäß eingesetzte Siloxanen (A) sind
(EtO)₂[(n-C₄H₉)₂NCH₂]SiO-(SiMe₂O)ₓ-Si[CH₂N(n-C₄H₉)₂](OEt)₂,
(EtO)₂[(n-C₄H₉)₂NCH₂]SiO-(SiMe₂O)ₓ(OEt)[(n-C₄H₉)₂NCH₂]SiO-(SiMe₂O)-ₓ-Si[CH₂N(n-C₄H₉)₂](OEt)₂,
(EtO)₂[(n-C₄H₉)₂NCH₂]SiO-(SiMe₂O)ₓ(OEt)[(n-C₄H₉)₂NCH₂]SiO-(SiMe₂O)ₓ-Si[CH₂N(n-C₄H₉)₂](OEt)-(SiMe₂O)ₓ-Si[CH₂N(n-C₄H₉)₂](OEt)₂,
[(EtO)₂[(n-C₄H₉)₂NCH₂]SiO-(SiMe₂O)ₓ]₂[(n-C₄H₉)₂NCH₂]SiO-(SiMe₂O)ₓ-Si[CH₂N(n-C₄H₉)₂](OEt)₂,
[(EtO)₂[(n-C₄H₉)₂NCH₂]SiO-(SiMe₂O)ₓ]₂[(n-C₄H₉)₂NCH₂]SiO-(SiMe₂O)ₓ-Si [CH₂N(n-C₄H₉)₂](OEt)-(SiMe₂O)ₓ-Si[CH₂N(n-C₄H₉)₂](OEt)₂ und
[(EtO)₂[(n-C₄H₉)₂NCH₂]SiO-(SiMe₂O)ₓ]₂[(n-C₄H₉)₂NCH₂]SiO-(SiMe₂O)ₓ-Si[CH₂N(n-C₄H₉)₂][-(SiMe₂O)ₓ-Si[CH₂N(n-C₄H₉)₂](OEt)₂]₂, wobei
(EtO)₂[(n-C₄H₉)₂NCH₂]SiO-(SiMe₂O)ₓ-Si[CH₂N(n-C₄H₉)₂](OEt)₂ oder
(EtO)₂[(n-C₄H₉)₂NCH₂]SiO-(SiMe₂O)ₓ(OEt)[(n-C₄H₉)₂NCH₂] SiO-(SiMe₂O)ₓ-Si[CH₂N(n-C₄H₉)₂](OEt)₂ bevorzugt und
(EtO)₂[(n-C₄H₉)₂NCH₂]SiO-(SiMe₂O)ₓ-Si[CH₂N(n-C₄H₉)₂](OEt)₂ besonders bevorzugt sind, mit Me gleich Methylrest, Et gleich Ethylrest und x gleich oder verschieden sein kann und eine ganze Zahl von 10 bis 405 bedeutet.

Die erfindungsgemäß eingesetzten Siloxane (A) sind bevorzugt bei 25°C und 1000 hPa flüssig.

Die erfindungsgemäß eingesetzten Siloxane (A) haben Viskositäten von bevorzugt 4000 mPas bis 10000 mPas, gemessen bei 25°C.

In den erfindungsgemäßen Massen enthaltene Silane (B) sind bereits bekannt und nach in der Siliziumchemie gängigen Methoden leicht herstellbar.

Beispiele für erfindungsgemäß eingesetzte Silane (B) sind
N,N-Dimethylaminomethyltriethoxysilan,
N,N-Diethylaminomethyltriethoxysilan,
N,N-Di-n-propylaminomethyltriethoxysilan,
N,N-Di-n-butylaminomethyltriethoxysilan,
N-n-Butylaminomethyltriethoxysilan,
N-But-2-ylaminomethyltriethoxysilan,
N-Cyclopentylaminomethyltriethoxysilan,
N-Cyclohexylaminomethyltriethoxysilan,
N,N-Dimethylaminomethyltrimethoxysilan,
N,N-Diethylaminomethyltrimethoxysilan,
N,N-Di-n-propylaminomethyltrimethoxysilan,
N,N-Di-n-butylaminomethyltrimethoxysilan,
N-n-Butylaminomethyltrimethoxysilan,
N-But-2-ylaminomethyltrimethoxysilan und
N-Cyclopentylaminomethyltrimethoxysilan,
N-Cyclohexylaminomethyltrimethoxysilan sowie deren Teilhydrolysate, wobei
N,N-Dimethylaminomethyltriethoxysilan,
N,N-Diethylaminomethyltriethoxysilan,
N,N-Di-n-propylaminomethyltriethoxysilan,
N,N-Di-n-butylaminomethyltriethoxysilan,
N-Cyclopentylaminomethyltriethoxysilan oder
N-Cyclohexylaminomethyltriethoxysilan oder deren Teilhydrolysate bevorzugt und
N,N-Dietylaminometyltriethoxysilan,
N,N-Di-n-butylaminomethyltriethoxysilan oder
N-Cyclohexylaminomethyltriethoxysilan oder deren Teilhydrolysate besonders bevorzugt sind.

Falls es sich bei Komponente (B) um Teilhydrolysate von Silanen der Formel (III) handelt, sind Teilhydrolysate mit 2 bis 10 Siliciumatomen bevorzugt.

Die erfindungsgemäßen Massen enthalten Komponente (B) in Mengen von vorzugsweise 5 bis 15 Gewichtsteilen, besonders bevorzugt von 5 bis 10 Gewichtsteilen, jeweils bezogen auf 100 Gewichtsteile Komponente (A).

Die erfindungsgemäß eingesetzten Siloxane (C) sind bereits bekannt und z.B. unter der Bezeichnung WACKER® TES 40 bei der Wacker Chemie AG, D-München käuflich erhältlich.

Beispiele für Siloxane (C) sind
(MeSiO_{3/2})_{0,37}(MeSi(OEt)O_{2/2})_{0,46}(MeSi(OEt)₂O_{1/2})_{0,17} mit Mw = 2400 g/mol, Mn = 900 g/mol und Mw/Mn = 2,7,
(MeSiO_{3/2})_{0,38}(MeSi (OEt)O_{2/2})_{0,46}(MeSi(OEt)₂O_{1/2})_{0,15}(Me₂SiO_{2/2})_{0,01} mit Mw = 2800 g/mol, Mn = 1000 g/mol und Mw/Mn = 2,8,
(MeSiO_{3/2})_{0,30}(MeSi(OMe)O_{2/2})_{0,47}(MeSi(OMe)₂O_{1/2})_{0,23} mit Mw = 2300 g/mol, Mn = 600 g/mol und Mw/Mn = 3,8,
(MeSiO_{3/2})_{0,32}(MeSi(OMe)O_{2/2})_{0,48}(MeSi(OMe)₂O_{1/2})_{0,20}
mit Mw = 3300 g/mol, Mn = 900 g/mol und Mw/Mn = 3,7,
(Si(OEt)₂O_{2/2})_{0,42}(Si(OEt)O_{3/2})_{0,19}(Si(OEt)₃O_{1/2})_{0,39}
mit Mw = 1000 g/mol, Mn = 800 g/mol und Mw/Mn = 1,2,
(Si(OEt)₂O_{2/2})_{0,48}(Si(OEt)O_{3/2})_{0,35}(Si(OEt)₃O_{1/2})_{0,09}(SiO_{4/2})_{0,08}
mit Mw = 1400 g/mol, Mn = 900 g/mol und Mw/Mn = 1,6,
(i-OctSi(OMe)O_{2/2})_{0,09}(i-OctSiO_{3/2})_{0,06}(i-OctSi(OMe)₂O_{1/2})_{0,08}(MeSiO_{3/2})_{0,23}(MeSi(OMe)O_{2/2})_{0,35}(MeSi(OMe)₂O_{1/2})_{0,19}
mit Mw = 1400 g/mol, Mn = 600 g/mol und Mw/Mn = 2,3 und
(i-OctSi(OMe)O_{2/2})_{0,12}(i-OctSiO_{3/2})_{0,05}(i-OctSi(OMe)₂O_{1/2})_{0,08}(MeSiO_{3/2})_{0,22}(MeSi(OMe)O_{2/2})_{0,33}(MeSi(OMe)₂O_{1/2})_{0,20}
mit Mw = 1600 g/mol, Mn = 700 g/mol und Mw/Mn = 2,3,
wobei Me gleich Methylrest, Et gleich Ethylrest und i-Oct gleich 2,4,4-Trimethylpentylrest bedeutet.

Bevorzugt handelt es sich bei den Siloxanen (C) um solche der Formel (IV) mit R⁶ gleich Methylrest (Me), R⁷ gleich Ethylrest (Et), a gleich 0 oder 1 und b gleich 1, 2 oder 3, wie beispielsweise
(MeSiO_{3/2})_{0,37}(MeSi(OEt)O_{2/2})_{0,46}(MeSi(OEt)₂O_{1/2})_{0,17}
mit Mw = 2400 g/mol, Mn = 900 g/mol und Mw/Mn = 2,7,
(MeSiO_{3/2})_{0,38}(MeSi(OEt)O_{2/2})_{0,46}(MeSi(OEt)₂O_{1/2})_{0,15}(Me₂SiO_{2/2})_{0,01}
mit Mw = 2800 g/mol, Mn = 1000 g/mol und Mw/Mn = 2,8,

(MeSiO_{3/2})_{0,30}(MeSi(OMe)O_{2/2})_{0,47}(MeSi(OMe)₂O_{1/2})_{0,23}
mit Mw = 2300 g/mol, Mn = 600 g/mol und Mw/Mn = 3,8,
(MeSiO_{3/2})_{0,32}(MeSi(OMe)O_{2/2})_{0,48}(MeSi(OMe)₂O_{1/2})_{0,20}
mit Mw = 3300 g/mol, Mn = 900 g/mol und Mw/Mn = 3,7,
(Si(OEt)₂O_{2/2})_{0,42}(Si(OEt)O_{3/2})_{0,19}(Si(OEt)₃O_{1/2})_{0,39}
mit Mw = 1000 g/mol, Mn = 800 g/mol und Mw/Mn = 1,2 oder
(Si(OEt)₂O_{2/2})_{0,48}(Si(OEt)O_{3/2})_{0,35}(Si(OEt)₃O_{1/2})_{0,09}(SiO_{4/2})_{0,08}
mit Mw = 1400 g/mol, Mn = 900 g/mol und Mw/Mn = 1,6,
besonders bevorzugt um Organosiloxane der Formel (IV) mit R⁷=Et und a=0, wie beispielsweise
(Si(OEt)₂O_{2/2})_{0,42}(Si(OEt)O_{3/2})_{0,19}(Si(OEt)₃O_{1/2})_{0,39}
mit Mw = 1000 g/mol, Mn = 800 g/mol und Mw/Mn = 1,2 oder
(Si(OEt)₂O_{2/2})_{0,48}(Si(OEt)O_{3/2})_{0,35}(Si(OEt)₃O_{1/2})_{0,09}(SiO_{4/2})_{0,08}
mit Mw = 1400 g/mol, Mn = 900 g/mol und Mw/Mn = 1,6.

Die Organosiloxane (C) weisen ein Gewichtsmittel Mw von bevorzugt 500 bis 10000 g/mol, besonders bevorzugt von 500 bis 8000 g/mol auf.

Die Organosiloxane (C), weisen ein Zahlenmittel Mn von bevorzugt 200 bis 5 000 g/mol, besonders bevorzugt von 200 bis 3 000 g/mol auf.

Die Organosiloxane (C) weisen Polydispersitäten Mw/Mn von bevorzugt 1 bis 5, besonders bevorzugt von 1 bis 4, auf.

In der vorliegenden Erfindung werden Gewichtsmittel Mw und Zahlenmittel Mn, gerundet auf ganze 100er Zahlen entsprechend DIN 1333:1992-02 Abschnitt 4, durch Gelpermeationschromatographie (GPC bzw. Size Exclusion Chromatographie (SEC)) entsprechend DIN 55672-1 bestimmt mit Polystyrol Standard und Brechungsindexdetektor (RI-Detektor). Wo nicht anders ausgewiesen wird THF als Elutionsmittel für phenylhaltige Komponenten und Toluol als Elutionsmittel für nicht-phenylhaltige Komponenten verwendet, und die Analysen werden bei einer Säulentemperatur von 45°C durchgeführt. Die Polydispersität ist der Quotient Mw/Mn.

Organosiloxane (C) sind bei 25°C und 1000 hPa bevorzugt flüssig.

Die erfindungsgemäßen Massen enthalten Komponente (C) in Mengen von, bevorzugt 1 bis 20 Gewichtsteilen, besonders bevorzugt 4 bis 10 Gewichtsteilen, jeweils bezogen auf 100 Gewichtsteile Komponente (A).

Bei den erfindungsgemäß eingesetzten Organosiliciumverbindungen (D) kann es sich sowohl um Silane handeln, d.h. Verbindungen der Formel (V) mit d+e+f=4, als auch um Siloxane, d.h. Verbindungen enthaltend Einheiten der Formel (V) mit d+e+f≤3, wobei es sich bevorzugt um Silane handelt.

Beispiele für Reste D sind solche der Formeln H₂NCH₂-, H₂N(CH₂)₃-, H₂N(CH₂)₂NH(CH₂)₃-, H₂N(CH₂)₂NH(CH₂)₃NH(CH₂)₃-, H₃CNH(CH₂)₃-, C₂H₅NH(CH₂)₃-, H₂N(CH₂)₄-, H₂N(CH₂)₅-, H(NHCH₂CH₂)₂-(CH₂)₃-, C₄H₉NH(CH₂)₂NH(CH₂)₃-, cyclo-C₆H₁₁NH(CH₂)₃-, (CH₃)₂N(CH₂)₃- und (C₂H₅)₂N(CH₂)₃-.

Bevorzugt handelt es sich bei Rest D um H₂N(CH₂)₃-, H₂N(CH₂)₂NH(CH₂)₃-, H₃CNH(CH₂)₃-, C₂H₅NH(CH₂)₃- oder cyclo-C₆H₁₁NH(CH₂)₃-Rest, besonders bevorzugt um H₂N(CH₂)₂NH(CH₂)₃- oder cyclo-C₆H₁₁NH(CH₂)₃-Rest, insbesondere um den H₂N(CH₂)₂NH(CH₂)₃-Rest.

Beispiele für Organosiliciumverbindungen (D) sind 3-Aminopropyltrimethoxysilan, 3-(2-Aminoethyl)aminopropyltrimethoxysilan, 3-Aminopropyltriethoxysilan, 3-(2-Aminoethyl)aminopropyltriethoxysilan, 3-Aminopropyldimethoxymethylsilan, 3-(2-Aminoethyl)-aminopropyldiethoxymethylsilan, 3-Aminopropyldiethoxymethylsilan, 3-(2-Aminoethyl)aminopropyldiethoxymethylsilan, 3-Amino-propyl(methyl)silsesquioxan, ethoxy-terminiert (CAS-Nummer 128446-60-6), Poly[3-(2-aminoethyl)aminopropyl]methylsiloxan, hydroxy-terminiert (CAS-Nummer 106214-80-6) und 3-(2-Aminoethyl)aminopropylsiloxan-dimethylsioxan-Copolymer (CAS-Nummer 67923-07-3) .

Bevorzugt handelt es sich bei Komponente (D) um 3-Aminopropyltriethoxysilan, 3-(2-Aminoethyl)aminopropyltrimethoxysilan, 3-(2-Aminoethyl)aminopropyldiethoxymethylsilan, 3-Aminopropyl(methyl)silsesquioxan, ethoxy-terminiert (CAS-Nummer 128446-60-6) oder 3-(2-Aminoethyl)aminopropylsiloxan-dimethylsioxan-Copolymer (CAS-Nummer 67923-07-3), wobei 3-(2-Aminoethyl)aminopropyl-trimethoxysilan, 3-Aminopropyl(methyl)silsesquioxan, ethoxy-terminiert (CAS-Nummer 128446-60-6) oder 3-(2-Aminoethyl)amino-propylsiloxan-dimethylsioxan-Copolymer (CAS-Nummer 67923-07-3) besonders bevorzugt sind.

Die erfindungsgemäßen Massen enthalten Komponente (D) in Mengen von vorzugsweise 0,1 bis 1,5 Gewichtsteilen, besonders bevorzugt 0,1 bis 1,0 Gewichtsteilen, insbesondere 0,3 bis 0,8 Gewichtsteilen, jeweils bezogen auf 100 Gewichtsteile Komponente (A) .

Die erfindungsgemäß eingesetzten Organosiliciumverbindungen (D) sind bereits bekannt und können nach in der Chemie gängigen Methoden hergestellt werden bzw. sind unter den Bezeichnungen GENIOSIL® GF 91, GENIOSIL® GF 93, GENIOSIL® GF 94, GENIOSIL® GF 95, GENIOSIL® GF 96, WACKER HAFTVERMITTLER AMS 60, WACKER HAFTVERMITTLER AMS 70 bei der WACKER Chemie AG käuflich erhältlich.

Zusätzlich zu den oben beschriebenen Komponenten (A), (B), (C) und (D) können die erfindungsgemäßen Massen nun alle Stoffe enthalten, die auch bisher in durch Kondensationsreaktion vernetzbaren Massen eingesetzt worden sind, wie z.B. organische Lösungsmittel (E), Füllstoffe (F), Pigmente (G), Weichmacher (H) und Katalysatoren (I).

Bevorzugt enthalten die erfindungsgemäßen Massen keine über die Komponenten (A) bis (I) hinausgehenden weiteren Bestandteile.

Beispiele für gegebenenfalls enthaltene Komponente (E) sind gesättigte Kohlenwasserstoffe mit 6 bis 20 Kohlenstoffatomen, die linear, verzweigt oder cyclisch sein können, wie beispielsweise Kohlenwasserstoffgemische, die unter der CAS-Nummer 64742-47-8 zusammengefasst sind.

Bevorzugt handelt es sich bei den gegebenenfalls eingesetzten Lösungsmitteln (E) um Kohlenwasserstoffgemische, die aus gesättigten Kohlenwasserstoffen mit 6 bis 20 Kohlenstoffatomen, ausgewählt aus verzweigten und cyclischen Verbindungen, bestehen.

Lösungsmittel (E) sind bei 25°C und 1000 hPa bevorzugt flüssig.

Vorzugsweise haben Lösungsmittel (E) einen Siedebeginn (initial boiling point; IBP) im Temperaturbereich von 90°C bis 270°C (ASTM D 86) und ein Siedeende (dry point; DP) im Temperaturbereich von 100°C bis 310°C (ASTM D 86).

Die gegebenenfalls eingesetzten Lösungsmittel (E) haben eine Dichte bei 15,6°C im Bereich von 0,699 bis 0,831 g/cm³ (EN ISO 12185).

Bevorzugt haben die gegebenenfalls eingesetzten Lösungsmittel (E) eine kinematische Viskosität bei 40°C von 0,5 mm²/s bis 8 mm²/s, besonders bevorzugt 2 mm²/s bis 5 mm²/s (ASTM D 445).

Falls die erfindungsgemäßen Massen Komponente (E) enthalten, handelt es sich um Mengen von vorzugsweise 5 bis 30 Gewichtsteilen, bevorzugt 10 bis 20 Gewichtsteilen, jeweils bezogen auf 100 Gewichtsteile Organosiloxan (A). Bevorzugt enthalten die erfindungsgemäßen Massen Komponente (E).

Beispiele für gegebenenfalls enthaltene Komponente (F) sind verstärkende Füllstoffe wie Ruß und Kieselsäuren, wobei Kieselsäuren bevorzugt und pyrogene Kieselsäuren besonders bevorzugt sind.

Die erfindungsgemäß eingesetzten Kieselsäuren (F) können oberflächenbehandelt sein. Insbesondere handelt es sich bei den pyrogenen Kieselsäuren (F) um mit Trimethylsiloxygruppen oberfächenmodifizierte pyrogene Kieselsäuren.

Falls die erfindungsgemäßen Massen Komponente (F) enthalten, handelt es sich um Mengen von vorzugsweise 5 bis 30 Gewichtsteilen, bevorzugt 8 bis 15 Gewichtsteilen, jeweils bezogen auf 100 Gewichtsteile Organosiloxan (A). Bevorzugt enthalten die erfindungsgemäßen Massen Komponente (F).

Beispiele für gegebenenfalls enthaltene Komponente (G) sind anorganische Pigmente wie Titandioxid sowie Eisenoxidpigmente in gelb, rot und schwarz.

Falls die erfindungsgemäßen Massen Komponente (G) enthalten, handelt es sich um Mengen von vorzugsweise 0,5 bis 2 Gewichtsteilen, bezogen auf 100 Gewichtsteile der Mischung der Bestandteile (A), (B), (C) und (D).

Bevorzugte handelt es sich bei der gegebenenfalls enthaltenen Komponente (H) um durch Triorganylsiloxygruppen endblockierte Diorganylpolysiloxane, besonders bevorzugt um durch Trimethylsiloxygruppen endblockierte Dimethylpolysiloxane.

Komponente (H) ist bevorzugt bei 25°C und 1000 hPa flüssig.

Insbesondere handelt es sich bei Weichmacher (H) um bei 25°C und 1000 hPa flüssige, durch Trimethylsiloxygruppen endblockierte Dimethylpolysiloxane.

Weichmacher (H) haben bevorzugt eine Viskosität bei 25°C im Bereich zwischen 5 und 1000 mPas, besonders bevorzugt von 35 bis 100 mPas.

Falls die erfindungsgemäßen Massen Komponente (H) enthalten, handelt es sich um Mengen von vorzugsweise 5 bis 20 Gewichtsteilen, bevorzugt 5 bis 10 Gewichtsteilen, jeweils bezogen auf 100 Gewichtsteile Organosiloxan (A). Bevorzugt enthalten die erfindungsgemäßen Massen Weichmacher (H).

Als gegebenenfalls enthaltene Katalysatoren (I) können alle bisher für feuchtigkeitsvernetzende System verwendeten Verbindungen, wie beispielsweise Diorganozinnverbindungen, Titanalkoxyalte, Titanchelate, Zink(2-ethylhexanoat), Bismuth-(III)(2-ethylhexanoat) eingesetzt werden.

Bevorzugt enthalten die erfindungsgemäßen Massen keine metallhaltigen Katalysatoren (I). Besonders bevorzugt enthalten die erfindungsgemäßen Massen keine Katalysatoren (I).

Bevorzugt handelt es sich bei den erfindungsgemäßen Massen um solche enthaltend
(A) Organosiloxane bestehend aus Einheiten der Formeln (I) und (II), mit der Maßgabe, dass pro Molekül mindestens zwei Reste R⁵ sowie mindestens vier Gruppen (OR⁴) anwesend sind,
(B) Silane der Formel (III) und/oder deren Teilhydrolysate in Mengen von 5 bis 20 Gewichtsteilen, bezogen auf 100 Gewichtsteile Komponente (A),
(C) Organosiloxane bestehend aus Einheiten der Formel (IV), mit der Maßgabe, dass in Formel (IV) die Summe a+b<4 ist, das Organosiloxan 2 bis 30 Einheiten der Formel (IV) aufweist und pro Molekül mindestens eine Einheit mit b verschieden 0 anwesend ist, in Mengen von 1 bis 30 Gewichtsteilen, bezogen auf 100 Gewichtsteile Komponente (A),
(D) Organosiliciumverbindungen enthaltend Einheiten der Formel (V), mit der Maßgabe, dass die Summe aus d+e+f kleiner oder gleich 4 ist, pro Molekül mindestens ein Rest D anwesend ist und pro Molekül mindestens ein Rest D eine NH₂-Gruppe trägt, in Mengen von 0,1 bis 2 Gewichtsteilen, bezogen auf 100 Gewichtsteile Komponente (A),
   sowie mindestens eine Komponente ausgewählt aus
(E) organischen Lösungsmitteln,
(F) Füllstoffen,
(G) Pigmenten und
(H) Weichmachern.

Des Weiteren bevorzugt handelt es sich bei den erfindungsgemäßen Massen um solche enthaltend
(A) Organosiloxane bestehend aus Einheiten der Formeln (I) und (II), mit der Maßgabe, dass pro Molekül mindestens zwei Reste R⁵ sowie mindestens vier Gruppen (OR⁴) anwesend sind,
(B) Silane der Formel (III) und/oder deren Teilhydrolysate in Mengen von 5 bis 20 Gewichtsteilen, bezogen auf 100 Gewichtsteile Komponente (A),
(C) Organosiloxane bestehend aus Einheiten der Formel (IV), mit der Maßgabe, dass in Formel (IV) die Summe a+b<4 ist, das Organosiloxan 2 bis 30 Einheiten der Formel (IV) aufweist und pro Molekül mindestens eine Einheit mit b verschieden 0 anwesend ist, in Mengen von 1 bis 30 Gewichtsteilen, bezogen auf 100 Gewichtsteile Komponente (A),
(D) Organosiliciumverbindungen enthaltend Einheiten der Formel (V), mit der Maßgabe, dass die Summe aus d+e+f kleiner oder gleich 4 ist, pro Molekül mindestens ein Rest D anwesend ist und pro Molekül mindestens ein Rest D eine NH₂-Gruppe trägt, in Mengen von 0,1 bis 2 Gewichtsteilen, bezogen auf 100 Gewichtsteile Komponente (A),
(E) organische Lösungsmittel,
gegebenenfalls (F) Füllstoffe,
gegebenenfalls (G) Pigmente und
gegebenenfalls (H) Weichmacher.

Des Weiteren bevorzugt handelt es sich bei den erfindungsgemäßen Massen um solche enthaltend
(A) Organosiloxane bestehend aus Einheiten der Formeln (I) und (II), mit der Maßgabe, dass pro Molekül mindestens zwei Reste R⁵ sowie mindestens vier Gruppen (OR⁴) anwesend sind,
(B) Silane der Formel (III) und/oder deren Teilhydrolysate in Mengen von 5 bis 20 Gewichtsteilen, bezogen auf 100 Gewichtsteile Komponente (A),
(C) Organosiloxane bestehend aus Einheiten der Formel (IV), mit der Maßgabe, dass in Formel (IV) die Summe a+b<4 ist, das Organosiloxan 2 bis 30 Einheiten der Formel (IV) aufweist und pro Molekül mindestens eine Einheit mit b verschieden 0 anwesend ist, in Mengen von 1 bis 30 Gewichtsteilen, bezogen auf 100 Gewichtsteile Komponente (A),
(D) Organosiliciumverbindungen enthaltend Einheiten der Formel (V), mit der Maßgabe, dass die Summe aus d+e+f kleiner oder gleich 4 ist, pro Molekül mindestens ein Rest D anwesend ist und pro Molekül mindestens ein Rest D eine NH₂-Gruppe trägt, in Mengen von 0,1 bis 2 Gewichtsteilen, bezogen auf 100 Gewichtsteile Komponente (A),
(E) organische Lösungsmittel,
(F) Füllstoffe,
gegebenenfalls (G) Pigmente und
gegebenenfalls (H) Weichmacher.

Des Weiteren bevorzugt handelt es sich bei den erfindungsgemäßen Massen um solche enthaltend
(A) Organosiloxane bestehend aus Einheiten der Formeln (I) und (II), mit der Maßgabe, dass pro Molekül mindestens zwei Reste R⁵ sowie mindestens vier Gruppen (OR⁴) anwesend sind,
(B) Silane der Formel (III) und/oder deren Teilhydrolysate in Mengen von 5 bis 20 Gewichtsteilen, bezogen auf 100 Gewichtsteile Komponente (A),
(C) Organosiloxane bestehend aus Einheiten der Formel (IV), mit der Maßgabe, dass in Formel (IV) die Summe a+b<4 ist, das Organosiloxan 2 bis 30 Einheiten der Formel (IV) aufweist und pro Molekül mindestens eine Einheit mit b verschieden 0 anwesend ist, in Mengen von 1 bis 30 Gewichtsteilen, bezogen auf 100 Gewichtsteile Komponente (A),
(D) Organosiliciumverbindungen enthaltend Einheiten der Formel (V), mit der Maßgabe, dass die Summe aus d+e+f kleiner oder gleich 4 ist, pro Molekül mindestens ein Rest D anwesend ist und pro Molekül mindestens ein Rest D eine NH₂-Gruppe trägt, in Mengen von 0,1 bis 2 Gewichtsteilen, bezogen auf 100 Gewichtsteile Komponente (A),
(E) organische Lösungsmittel,
gegebenenfalls (F) Füllstoffe,
gegebenenfalls (G) Pigmente und
(H) Weichmacher.

Des Weiteren bevorzugt handelt es sich bei den erfindungsgemäßen Massen um solche enthaltend
(A) Organosiloxane bestehend aus Einheiten der Formeln (I) und (II), mit der Maßgabe, dass pro Molekül mindestens zwei Reste R⁵ sowie mindestens vier Gruppen (OR⁴) anwesend sind,
(B) Silane der Formel (III) und/oder deren Teilhydrolysate in Mengen von 5 bis 20 Gewichtsteilen, bezogen auf 100 Gewichtsteile Komponente (A),
(C) Organosiloxane bestehend aus Einheiten der Formel (IV), mit der Maßgabe, dass in Formel (IV) die Summe a+b<4 ist, das Organosiloxan 2 bis 30 Einheiten der Formel (IV) aufweist und pro Molekül mindestens eine Einheit mit b verschieden 0 anwesend ist, in Mengen von 1 bis 30 Gewichtsteilen, bezogen auf 100 Gewichtsteile Komponente (A),
(D) Organosiliciumverbindungen enthaltend Einheiten der Formel (V), mit der Maßgabe, dass die Summe aus d+e+f kleiner oder gleich 4 ist, pro Molekül mindestens ein Rest D anwesend ist und pro Molekül mindestens ein Rest D eine NH₂-Gruppe trägt, in Mengen von 0,1 bis 2 Gewichtsteilen, bezogen auf 100 Gewichtsteile Komponente (A),
(E) organische Lösungsmittel,
(F) Füllstoffe,
gegebenenfalls (G) Pigmente und
(H) Weichmacher.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Die erfindungsgemäßen Massen haben Viskositäten bevorzugt von 1000 mPas bis 50000 mPas, besonders bevorzugt von 1000 mPas bis 20000 mPas, insbesondere von 1000 mPas bis 5000 mPas, jeweils bei 25°C.

Zur Bereitung der erfindungsgemäßen Massen können alle Bestandteile in beliebiger Reihenfolge miteinander vermischt werden. Dieses Vermischen kann bei Raumtemperatur und dem Druck der umgebenden Atmosphäre, also etwa 900 bis 1100 hPa, oder unter vermindertem Druck von etwa 20 hPa bis 800 hPa erfolgen. Falls erwünscht, kann dieses Vermischen aber auch bei höheren oder niedrigeren Temperaturen erfolgen, z.B. bei Temperaturen im Bereich von 15 bis 135°C. Falls gewünscht kann geheizt oder gekühlt werden.

Ein weiterer Gegenstand der vorliegenden Erfindung ist ein Verfahren zur Herstellung der erfindungsgemäßen Massen durch Mischen der einzelnen Komponenten in beliebiger Reihenfolge.

Eine bevorzugte Ausführungsform des erfindungsgemäßen Verfahrens besteht darin zunächst α,ω-Dihydroxypolydimethylsiloxane (A0) mit Silanen der Formel (III) im molaren Überschuss, bevorzugt 5 bis 10 Mol Silan der Formel (III) pro Mol Siloxan (A0), miteinander zu vermischen und unter Abspaltung des Alkohols R⁴OH mit R⁴ gleich der obengenannten Bedeutung reagieren zu lassen, wobei eine Mischung aus Organosiloxanen (A) und überschüssigen Silanen der Formel (III) erhalten wird, und zu dieser Mischung dann alle weiteren Komponenten in beliebiger Reihenfolge zuzugeben.

Gemäß einer weiteren bevorzugten Ausführungsform des erfindungsgemäßen Verfahrens werden in einer ersten Stufe α,ω-Dihydroxypolydimethylsiloxane (A0) und Silane der Formel (III) bei vermindertem Druck, bevorzugt bei 20 bis 200 hPa, und erhöhter Temperatur, bevorzugt im Bereich von 50 bis 100°C, im molaren Überschuss, bevorzugt 5 bis 10 Mol Silan der Formel (III) pro Mol Siloxan (A0), miteinander vermischt und reagieren gelassen und von sich bei der Reaktion der beiden Komponenten bildendem Alkohol R⁴OH befreit, und in einer zweiten Stufe zu der so erhaltenen Mischung dann bei einem Druck von 900 bis 1100 hPa und einer Temperatur von 15 bis 60°C, alle weiteren Komponenten in beliebiger Reihenfolge zugegeben.

Eine weitere bevorzugte Ausführungsform des erfindungsgemäßen Verfahrens besteht darin zunächst α,ω-Di-hydroxypolydimethylsiloxane (A0) mit allen Komponenten außer dem Silan der Formel (III) in beliebiger Reihenfolge zu mischen und zum Schluss das Silan der Formel (III) zuzugeben. Dabei ist es vollkommen unerheblich, ob die Umsetzung des α,ω-Di-hydroxypolydimethylsiloxans (A0) mit dem Silan der Formel (III) bereits vollständig stattgefunden hat, bevor weitere Komponenten zugesetzt werden.

Die erfindungsgemäßen bzw. erfindungsgemäß hergestellten Massen sind unter Ausschluss von Wasser lagerfähig und vernetzen bei Zutritt von Wasser, bevorzugt bereits bei Temperatur der Umgebung.

Die erfindungsgemäßen Massen eignen sich somit ausgezeichnet als Beschichtung für viele verschiedene Baustoffe. Die Anwendung erfolgt überwiegend im Freien. Anwendungen in Innenräumen sind aber auch möglich.

Für die Vernetzung der erfindungsgemäßen Massen reicht der übliche Wassergehalt der Luft aus. Die Herstellung der Beschichtung und die sich daran anschließende Vernetzung der erfindungsgemäßen Massen erfolgt vorzugsweise bei +5° bis +50°C.

Vorzugsweise erfolgt die Vernetzung der erfindungsgemäßen Massen bei einem Druck der umgebenden Atmosphäre, also etwa 900 bis 1100 hPa.

Vorzugsweise wird die Vernetzung der erfindungsgemäßen Massen bei einer relativen Luftfeuchtigkeit von 10-90%, besonders bevorzugt bei 30-70%, durchgeführt.

Ein weiterer Gegenstand der vorliegenden Erfindung sind Formkörper, hergestellt durch Vernetzung der erfindungsgemäßen Massen.

Die erfindungsgemäßen Massen haben bei der Aushärtung Hautbildungszeiten bevorzugt zwischen 5 Minuten und 120 Minuten.

Die aus den erfindungsgemäßen Massen herstellbaren ausgehärteten Formkörper haben bevorzugt Zugfestigkeiten von 0,25 MPa bis 1,50 MPa, gemessen nach DIN 51504 an der Prüfkörperform S2.

Die erfindungsgemäßen Massen eignen sich beispielsweise ausgezeichnet zur Behandlung von jeglichen Untergründen, insbesondere von Bauwerken aller Art.

Ein weiterer Gegenstand der Erfindung ist ein Verfahren zur Behandlung von Substraten, insbesondere gegen Verschmutzung, bei dem die erfindungsgemäßen oder erfindungsgemäß hergestellten Massen auf die Substrate aufgebracht und vernetzen gelassen werden.

Beispiele für Substrate, die mit den erfindungsgemäßen Massen behandelt werden können, sind mineralische Stoffe, wie Mauerwerk, Mörtel, Putz, Ziegel, Kalkstein, Kalksandstein, Sandstein und Natursteine, wie Granit, Marmor und Porphyr, Glas, Beton und Porenbeton, lackierte Metalloberflächen und organische Stoffe, wie Holz, Epoxidharz-, Polyurethan- und Polyesterbeschichtungen.

Bevorzugt handelt es sich bei den Substraten um mineralische Stoffe.

Die erfindungsgemäß eingesetzten Substrate können unterschiedliche Porosität aufweisen. Ein Maß für die Porosität kann zum Beispiel der Wasseraufnahmekoeffizient sein, wie er im "Lehrbuch der Bauphysik", von Lutz, Jenisch, Klopfer, Freymuth, Krampf und Petzold, Verlag B.G Teubner, 4. Auflage von 1997, Seite 354 beschrieben ist. Die Substrate können danach stark saugend, wasserhemmend, wasserabweisend und wasserdicht sein.

Beim erfindungsgemäßen Verfahren werden die vernetzbaren Massen durch gängige und bisher bekannte Methoden der Verteilung auf die Oberfläche der Substrate gegeben, wie z.B. durch Streichen, Spritzen, Rakeln, Rollen, Sprühen, Pinseln, Gießen, Spachteln, Tauchen und Walzen.

Bei dem erfindungsgemäßen Verfahren wird die erfindungsgemäße Masse in Mengen von bevorzugt 100 bis 400g, bezogen auf 1 m² Substratoberfläche, eingesetzt.

Um eine gute Haftung zu erzielen, wird die Substratoberfläche bevorzugt zunächst von allem losen Schmutz und Fett und losen Baustoffbestandteilen, wie z.B. losen anhaftenden Sand auf Putzoberflächen oder der sogenannten Schlämme auf Betonoberflächen, befreit.

Die erfindungsgemäß eingesetzten Substrate sind bevorzugt weitgehend trocken, wobei eine geringe Restfeuchte des Substrats für die Durchführung des erfindungsgemäßen Verfahrens kein Problem darstellt. Ob der Trocknungsgrad des Substrates ausreichend ist, kann gegebenenfalls durch Vorversuche ermittelt werden, da die Umgebungsbedingungen bei der Applikation im Freien sehr stark variieren können. Vorzugsweise sind die Substratoberflächen nicht mit Wasser komplett vollgesogen. Auf stark saugenden oder wasserhemmenden Oberflächen befindet sich bevorzugt keine sichtbare Wasserschicht. Darüber hinaus befinden sich bevorzugt auch keine Wassertropfen auf wasserdichten Substraten.

Falls erwünscht kann, um eine gute Haftung der Beschichtung auf dem jeweiligen Untergrund zu erzielen, eine Vorbehandlung mit einem die Haftung auf dem Untergrund verbessernden Mittel, einem sog. Haftvermittler, auch Primer genannt, nach dem Stand der Technik erfolgen. Bevorzugt ist jedoch keine Vorbehandlung mit einem Primer erforderlich.

Nach dem erfindungsgemäßen Verfahren wird die auf das Substrat aufgebrachte Masse vernetzen gelassen.

Die erfindungsgemäßen Massen sind nach einer Vernetzungszeit von bevorzugt 30 Minuten bis 24 Stunden an der Substratoberfläche klebfrei.

Die erfindungsgemäß behandelten Substrate lassen sich nun leicht von Verunreinigungen, wie Farbe, Teer, Ruß und insbesondere von sog. Graffiti befreien.

Zur Entfernung der Verunreinigungen kann die die Verschmutzung tragende Oberfläche rein mechanisch, beispielsweise durch Abbürsten oder Abwischen mit Wasser oder mit einen Wasserstrahl unter hohem Druck entfernt werden.

Bevorzugt ist eine Entfernung der Verunreinigung, insbesondere des Graffitis, mittels einer Behandlung mit Wasser bei einer Temperatur von vorzugsweise unter 80°C, bevorzugt 1 bis 60°C, wobei sich die Verunreinigung, insbesondere das Graffiti, durch einfaches Abwaschen, Abreiben oder aber mit einem Wasserstrahl mit einem Druck von maximal 200 bar ganz oder teilweise entfernen lässt.

Der Erfindung liegt die überraschende Entdeckung zugrunde, dass die erfindungsgemäßen Massen sowohl die für eine Beschichtungsmasse notwendigen guten mechanischen Eigenschaften als auch exzellente Anti-Graffiti-Eigenschaften aufweisen.

Darüber hinaus ist besonders überraschend, dass die erfindungsgemäßen Massen sehr gut auf vielen Untergründen haften, aber dennoch Graffiti oder andere Verschmutzungen sehr schlecht auf der Oberfläche der Beschichtung haften.

Die erfindungsgemäßen Massen haben den Vorteil, dass sie sich bei sehr variablen Bedingungen der Umgebung bezüglich der Temperatur und der Luftfeuchte problemlos applizieren lassen und sowohl bei niedriger Temperatur und niedriger absoluter Luftfeuchte, als auch bei hoher Temperatur und hoher absoluter Luftfeuchte anwenden lassen und nach kurzer Zeit klebfreie Oberflächen erhalten werden.

Ein weiterer Vorteil der erfindungsgemäßen Massen ist, dass sie sehr lagerstabil sind und sich die Eigenschaften bei der Lagerung nur unwesentlich verändern.

Ferner haben die erfindungsgemäßen Massen den Vorteil, dass sich ihre Viskosität nicht oder nur in einem solchen Maß verändert, das die Applizierbarkeit nicht beeinträchtigt.

Auch die Aushärtungscharakteristik der erfindungsgemäßen Massen ändert sich vorteilhafterweise während der Lagerung nicht wesentlich. Die mechanischen Eigenschaften von Beschichtungen, die aus länger gelagerten Massen hergestellt werden, unterscheiden sich nicht oder nur unwesentlich von den mechanischen Eigenschaften, wie sie von frisch hergestellten Massen erhalten werden.

Das erfindungsgemäße Verfahren zur Herstellung der vernetzbaren Massen hat den Vorteil, dass es einfach in der Durchführung ist.

Die erfindungsgemäßen Massen zeichnen sich bei der Beschichtung von Substraten durch eine leichte Applizierbarkeit aus, welche durch Rollen, Sprühen oder Pinseln erfolgen kann.

Die erfindungsgemäße Beschichtung zeichnet sich nach der Applikation durch eine zügige Aushärtung unter Einfluss der Luftfeuchtigkeit aus.

Die erfindungsgemäße Beschichtung zeichnet sich durch eine außerordentlich niedrige Oberflächenenergie aus, weshalb andere Substanzen nur sehr schlecht haften. So können Graffiti mit Hilfe eines Schwamms oder handelsüblichen Hochdruckreinigers mit kaltem Wasser abgewaschen werden, ohne dass ein spezielles Reinigungsmittel verwendet werden muss. Poster oder Plakate fallen entweder unter ihrem Eigengewicht von selbst ab oder lassen sich mühelos abziehen.

Die erfindungsgemäße Beschichtung zeichnet sich durch eine hohe Permanenz aus. Die Anti-Graffiti-Schutzwirkung bleibt selbst nach 20 Reinigungszyklen vollständig erhalten.

Vorteil der erfindungsgemäßen Anti-Graffiti-Beschichtungen ist, dass sie sowohl eine hohe Permanenz als auch eine gute Wasserdampfdurchlässigkeit aufweisen und hohen optischen Ansprüchen genügen.

Die erfindungsgemäße Beschichtung zeichnet sich durch eine gute und dauerhafte Haftung auf allen gängigen porösen mineralischen oder nicht porösen Untergründen, aber auch auf Holz und Epoxidharzbeschichtungen aus, ohne dass die Untergründe zuvor mit einem Primer behandelt werden müssen.

Die erfindungsgemäße Beschichtung besitzt den Vorteil, diffusionsoffen zu sein, so dass Wasserdampf hindurchtreten kann. Daher kann die erfindungsgemäße Beschichtung auch auf noch nicht vollständig getrockneten leicht feuchten oder nachfeuchtenden Untergründen eingesetzt werden.

Die erfindungsgemäße Beschichtung zeichnet sich überraschenderweise durch eine hohe Dauerhaftigkeit auch bei Einwirkung von UV-Strahlung, bei Frost-Tau-Wechsel sowie regelmäßiger Beregnung aus.

Die erfindungsgemäßen Beschichtungen haben den Vorteil, dass sie sich durch gute mechanische Eigenschaften, insbesondere einer hohen Elastizität auch bei niedrigen Temperaturen, auszeichnen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

Folgende Edukte wurden in den Beispielen verwendet:
**OH-Siloxan 1:** α,ω-Dihydroxypolydimethylsiloxan der mittleren Formel HO(Si(CH₃)₂O)₃₈₀H mit einer mittleren Molmasse (Zahlenmittel Mₙ) von 28138 g/mol und mit einer Viskosität von 6000 mPas;
**OH-Siloxan 2:** α,ω-Dihydroxypolydimethylsiloxan der mittleren Formel HO(Si(CH₃)₂O)₂₆₂H mit einer mittleren Molmasse (Zahlenmittel Mₙ) von 19406 g/mol und mit einer Viskosität von 2000 mPas;
**Alkanlösungsmittel:** Kohlenwasserstoffgemisches bestehend aus Isoalkanen mit 11 bis 16 Kohlenstoffatomen, einem Destillationsbeginn von 227°C (ASTM D 86), einem Destillationsende bei 254°C(ASTM D 86), einer Dichte von 0,79 g/cm³ bei 15,6°C (EN ISO 12185) und einer kinematischen Viskosität von 2,72 mm²/s bei 40°C (ASTM D 445) (käuflich erhältlich unter der Bezeichnung Isopar® M bei der Fa. Exxon Mobile);
**Siloxan H:** α-Trimethylsilyl-ω-trimethylsiloxypolydimethylsiloxans mit einer Viskosität von 100 mPas;
**Kieselsäurefüllstoff:** durch Trimethylsiloxygruppen oberflächenmodifizierte pyrogene Kieselsäure mit einem Kohlenstoffgehalt von 2,3-3,2 Gew.-% (nach DIN ISO 10694), einer Stampfdichte von 100 bis 250 g/l (nach DIN EN ISO 787-11) und mit einer BET-Oberfläche von 190 bis 210 m²/g für die pyrogene Kieselsäure vor der Oberflächenbehandlung (käuflich erhältlich unter der Bezeichnung HDK® H2000 bei der Wacker Chemie AG, D-München);
**Silanhydrolysat:** oligomere Tetraethoxysilan-Hydrolysat mit einer Dichte bei 20°C (DIN 51757) von 1,06 bis 1,07 g/cm³, einem Flammpunkt (DIN 51755) von 62°C und einem SiO₂-Gehalt von etwa 41 % (käuflich erhältlich unter der Bezeichnung WACKER® TES 40 bei der Wacker Chemie AG, D-München).

### Viskosität

Die in dieser Erfindung angegebenen Viskositäten wurden nach DIN 53019 gemessen, falls nicht anders angegeben. Dabei wurde wie folgt vorgegangen: Die Viskosität wird, sofern nicht anders angegeben, bei 25°C mittels eines Rotationsrheometers "Physica MCR 300" von der Firma Anton Paar gemessen. Dabei wird für Viskositäten von 1 bis 200 mPa·s ein koaxiales Zylinder-Messsystem (CC 27) mit einem Ring-Messspalt von 1,13 mm genutzt und für Viskositäten von größer als 200 mPa·s ein Kegel-Platte-Messsystem (Searle-System mit Messkegel CP 50-1) verwendet. Die Schergeschwindigkeit wird der Polymerviskosität angepasst (1 bis 99 mPa·s bei 100 s⁻¹; 100 bis 999 mPa·s bei 200 s⁻¹; 1000 bis 2999 mPa·s bei 120 s⁻¹; 3000 bis 4999 mPa·s bei 80 s⁻¹; 5000 bis 9999 mPa·s bei 62 s⁻¹; 10000 bis 12499 mPa·s bei 50 s⁻¹; 12500 bis 15999 mPa·s bei 38,5 s⁻¹; 16000 bis 19999 mPa·s bei 33 s⁻¹; 20000 bis 24999 mPa·s bei 25 s⁻¹; 25000 bis 29999 mPa·s bei 20 s⁻¹; 30000 bis 39999 mPa·s bei 17 s⁻¹; 40000 bis 59999 mPa·s bei 10 s⁻¹; 60000 bis 149999 bei 5 s⁻¹; 150000 bis 199999 mPa·s bei 3,3 s⁻¹; 200000 bis 299999 mPa·s bei 2,5 s⁻¹; 300000 bis 1000000 mPa·s bei 1,5 s⁻¹.

Nach Temperierung des Messsystems auf die Messtemperatur wird ein dreistufiges Messprogramm bestehend aus einer Einlaufphase, einer Vorscherung und einer Viskositäts-Messung angewandt. Die Einlaufphase erfolgt durch stufenweise Erhöhung der Schergeschwindigkeit innerhalb einer Minute auf die oben angegebene von der zu erwartenden Viskosität abhängige Schergeschwindigkeit bei der die Messung erfolgen soll. Sobald diese erreicht ist, erfolgt bei konstanter Schergeschwindigkeit die Vorscherung für 30 s, anschließend werden zur Bestimmung der Viskosität 25 Einzelmessungen für je 4,8 s durchgeführt, aus denen der Mittelwert bestimmt wird. Der Mittelwert entspricht der dynamischen Viskosität, die in mPa·s angegeben wird.

### Hautbildungszeit

Das zu untersuchende Material wird bei 23°C einer relativen Luftfeuchtigkeit von 50% ausgesetzt, wobei eine Aushärtung von der Oberfläche her stattfindet. In Abstand von 1 min berührt man nun die Oberfläche leicht mit dem Finger und hebt den Finger sofort wieder ab. Anschließend wird beurteilt, ob Masse am Finger hängengeblieben ist oder nicht. Die Hautbildungszeit ist erreicht, wenn keine Masse mehr am Finger kleben bleibt. Diese Methode hat nur eine Genauigkeit von etwa +/- 2 Minuten, was aber für den Zweck völlig ausreichend ist.

### Klebfreiheit

Nachdem sich eine Haut gebildet hat, wird die Haut nach 30 min, stündlich von 1 Stunde bis 7 Stunden und nach 24 Stunden mit dem Finger berührt. Sobald sich nach den angegebenen Zeiten die Haut klebfrei anfühlt, ist die Klebfreiheit erreicht.

Die mechanischen Eigenschaften der nach Aushärtung der erfindungsgemäßen Mischungen erhältlichen Formkörper wurden nach DIN 51504 ermittelt. Die Härte der Formkörper wurde nach DIN 53505 ermittelt. Zur Ermittlung der mechanischen Eigenschaften wurde die Mischung in eine PTFE-Form mit kreisrunder Aussparung mit einem Durchmesser von 20cm und einer Tiefe von 5mm randvoll gegossen und das Material 7 Tage bei 25°C und 50% relativer Luftfeuchte gelagert. Prüfkörper der Form S2 wurden ausgestanzt und die Zugfestigkeit, Reißdehnung und die Spannung bei 100% Dehnung gemäß DIN 53504 ermittelt.

### Beispiel 1

224,1g des OH-Siloxans 1, 173,0g des OH-Siloxans 2 wurden gemischt, mit 37,8g N,N-Dibutylaminomethyltriethoxysilan versetzt und 15 min bei einer Umgebungstemperatur von 25°C und einem Druck von etwa 1000 hPa in einem Mischer der Marke LabMax der Firma Molteni gerührt. Diese Mischung hatte nach der Umsetzung eine Viskosität von 5240 mPas.

Zu der so erhaltenen Mischung wurden 25,9g des Siloxans H und 50,4g des Kieselsäurefüllstoffs zugegeben und bei einer Rührgeschwindigkeit von 400 min⁻¹ bei 25°C für weitere 10 Minuten gemischt. Anschließend wurden 22,4g des Silanhydrolysats und 2,8g 3-(2-Aminoethyl)aminopropyltrimethoxysilan zugesetzt und weitere 5 min mit einer Rührgeschwindigkeit von 400 min⁻¹ gemischt.

Schließlich wurden 63,3g des Alkanlösungsmittels zugegeben und weitere 25 Minuten bei einem Druck von 100 hPa gemischt. Dabei erhöhte sich die Temperatur der Mischung von anfänglich 25°C auf 45°C. Diese Mischung wurde zum Schluss in feuchtigkeitsdichte Gebinde abgefüllt. Die Mischung hatte eine Viskosität von 9680 mPas.

Die Hautbildungszeit betrug 15 min. Die Klebfreiheit betrug 4 Stunden. Die Zugfestigkeit betrug 0,76 MPa, Die Reißdehnung betrug 200%, die Spannung bei 100% Dehnung betrug 0,43 MPa und die Härte betrug 26 ShoreA. Die Charakterisierung der Mischung bezüglich ihrer Anti-Grafitti-Eigenschaften ist in Beispiel 2 beschrieben.

### Beispiel 2

Die nach Beispiel 1 erhaltene Masse wurde mit Hilfe eines Pinsels auf acht Kalksandsteinplatten (11 X 24cm) - jeweils 200 g/m² - aufgetragen. Dabei wurde die Applikationsmenge bestimmt, indem die Kalksandsteinplatten jeweils vor und 1 h nach der Beschichtung gewogen wurden. Da die Dichte der ausgehärten Beschichtung etwa 1 kg/l beträgt, ergibt sich daraus eine Schichtdicke von etwa 200µm.

Nach etwa vier Stunden Trocknungszeit bei 23°C und einer Luftfeuchtigkeit von 50% war der Film klebfrei, und nach 24h wurden verschiedene Lacktypen (MIPA Lack Spray, Acryllack 1K und 2K von MIPA SE, D-84051 Essenbach) auf das ausgehärtete Produkt aufgesprüht. Andere Bereiche der Beschichtung wurden mit Markern (Edding, Masterpiece 760PI Coversall von Molotow (Tacker)) beschriftet.

Anschließend wurden die besprühten und beschrifteten Platten in der Freibewitterung gelagert. Dabei wurden die Platten mit einem 60°-Winkel zur Waagerechten in einer exakten Süd-West-Ausrichtung aufgestellt. Nach unterschiedlich langen Lagerzeiten (1 Tag, 1 Woche, 6 Monaten und 1 Jahr) wurden jeweils zwei Platten gereinigt. Dabei wurde bei der jeweils ersten Platte das Graffiti mit einem wasserfeuchten Tuch oder Schwamm händisch abgenommen. Von der jeweils zweiten Platte wurde das Graffiti mit einem Hochdruckreiniger mit 100 bar Pumpendruck und einem Abstand von 10 cm von der Oberfläche entfernt. Es ließen sich von allen Platten, unabhängig von der Dauer der Lagerzeit im Freien, die Graffiti rückstandslos entfernen.

Bei den Platten, die jeweils nur 1 Tag gelagert worden sind, wurde der Vorgang der Graffiti-Applikation und Markerbeschriftung mitsamt dem 24 h später erfolgenden Abreinigen zwanzigmal wiederholt. Dabei kam es zu keiner erkennbaren Beschädigung der Oberfläche. Auch bei der zwanzigsten Wiederholung ließen sich die Graffiti- und Markermuster genauso problem- und rückstandslos entfernen, wie bei dem ersten Reinigungsschritt.

Über die Abreinigungseigenschaften hinaus wurde der sd Wert nach DIN EN ISO 7783-2 bestimmt. Der sich nach 14 Tagen Aushärtung bei 23°C und 50% rel. Luftfeuchtigkeit ausbildende Film wies einen sd-Wert von 0,25 m (bei 200 g/m²)auf, was einer mittlere Atmungsaktivität entspricht.

### Beispiel 3

Die Herstellung der Mischung gemäß Beispiel 1 wurde wiederholt mit der Abänderung, dass anstelle der in Beispiel 1 angegebenen 37,8g N,N-Dibutylaminomethyltriethoxysilan jetzt 35g N,N-Dibutylaminomethyltriethoxysilan zugesetzt wurden. Diese Mischung hatte nach der Umsetzung eine Viskosität von 6430 mPas. Zu dieser Mischung wurden 25,9g des Siloxans H und 50,4g des Kieselsäurefüllstoffs zugegeben und bei einer Rührgeschwindigkeit von 400 min⁻¹ bei 25°C für weitere 10 Minuten gemischt. Anschließend wurden 22,4g des Silanhydrolysats und 2,8g 3-(2-Aminoethyl)-aminopropyltrimethoxysilan zugesetzt und weitere 5 min mit einer Rührgeschwindigkeit von 400 min⁻¹ gemischt.

Schließlich wurden 63,3g des Alkanlösungsmittels zugegeben und weitere 25 Minuten bei vermindertem Druck von 100 hPa gemischt. Dabei erhöhte sich die Temperatur der Mischung von anfänglich 25°C auf 45°C. Diese Mischung wurde zum Schluss in feuchtigkeitsdichte Gebinde abgefüllt. Die Mischung hatte eine Viskosität von 10800 mPas.

Die Hautbildungszeit betrug 15 min. Die Klebfreiheit betrug 4 Stunden. Die Zugfestigkeit betrug 0,73 MPa, Die Reißdehnung betrug 200%, die Spannung bei 100% Dehnung betrug 0,41 MPa und die Härte betrug 25 ShoreA.

Die Charakterisierung der Mischung bezüglich ihrer Anti-Graffiti-Eigenschaften erfolgte wie in Beispiel 2 beschrieben. Die Verunreinigungen ließen sich in jedem Fall vollständig beseitigen.

### Beispiel 4

Die Herstellung der Mischung gemäß Beispiel 1 wurde wiederholt mit der Abänderung, dass anstelle der in Beispiel 1 angegebenen 37,8g N,N-Dibutylaminomethyltriethoxysilan jetzt 28g N,N-Dibutylaminomethyltriethoxysilan zugesetzt wurden. Diese Mischung hatte nach der Umsetzung eine Viskosität von 8700 mPas. Zu dieser Mischung wurden 25,9g des Siloxans H und 50,4g des Kieselsäurefüllstoffs zugegeben und bei einer Rührgeschwindigkeit von 400 min⁻¹ bei 25°C für weitere 10 Minuten gemischt. Anschließend wurden 22,4g des Silanhydrolysats und 2,8g 3-(2-Aminoethyl)aminopropyltrimethoxysilan zugesetzt und weitere 5 min mit einer Rührgeschwindigkeit von 400 min⁻¹ gemischt.

Schließlich wurden 63,3g des Alkanlösungsmittels zugegeben und weitere 25 Minuten bei vermindertem Druck von 100 hPa gemischt. Dabei erhöhte sich die Temperatur der Mischung von anfänglich 25°C auf 45°C. Diese Mischung wurde zum Schluss in feuchtigkeitsdichte Gebinde abgefüllt. Die Mischung hatte eine Viskosität von 11300 mPas.

Die Hautbildungszeit betrug 10 min. Die Klebfreiheit betrug 5 Stunden. Die Zugfestigkeit betrug 0,63 MPa, Die Reißdehnung betrug 1500%, die Spannung bei 100% Dehnung betrug 0,46 MPa und die Härte betrug 25 ShoreA.

Die Charakterisierung der Mischung bezüglich ihrer Anti-Graffiti-Eigenschaften erfolgte wie in Beispiel 2 beschrieben. Die Verunreinigungen ließen sich in jedem Fall vollständig beseitigen.

### Beispiel 5

258,7g des OH-Siloxans 1, 138,4g des OH-Siloxans 2 und 20,5g des Siloxans H wurden mit 40,3g des Kieselsäurefüllstoffs versetzt und in einem Mischer der Marke LabMax der Fa. Molteni bei einer Rührgeschwindigkeit von 400 min⁻¹ bei 25°C für 10 Minuten gemischt. Anschließend wurden 18,1g des Silanhydrolysats, 36,1g N,N-Dibutylaminomethyltriethoxysilan und 2,4g 3-(2-Aminoethyl)-aminopropyltrimethoxysilan zugesetzt und 5 min mit einer Rührgeschwindigkeit von 400 min⁻¹ gemischt. Schließlich wurden 51,4g des Alkanlösungsmittels zugegeben und weitere 25 min bei vermindertem Druck von 100 hPa gemischt. Dabei erhöhte sich die Temperatur der Mischung von anfänglich 25°C auf 45°C. Diese Mischung wurde zum Schluss in feuchtigkeitsdichte Gebinde abgefüllt. Die Mischung hatte eine Viskosität von 3920 mPas.

Die Hautbildungszeit betrug 10 min. Die Klebfreiheit betrug 6 Stunden. Die Zugfestigkeit betrug 0,88 MPa, Die Reißdehnung betrug 140%, die Spannung bei 100% Dehnung betrug 0,63 MPa und die Härte betrug 27 ShoreA.

Die Charakterisierung der Mischung bezüglich ihrer Anti-Graffiti-Eigenschaften erfolgte wie in Beispiel 2 beschrieben. Die Verunreinigungen ließen sich in jedem Fall vollständig beseitigen.

### Beispiel 6

224,1g des OH-Siloxans 1 und 173,0g des OH-Siloxans 2 wurden gemischt, mit 37,8g N,N-Dibutylaminomethyltriethoxysilan versetzt und 15 min bei einer Umgebungstemperatur von 25°C in einem Mischer der Marke LabMax der Firma Molteni gerührt. Diese Mischung wurde anschließend 1 Stunde bei 80°C und vermindertem Druck von 100 mbar von gebildetem Alkohol befreit. Die so erhaltene Mischung hatte nach der Umsetzung eine Viskosität von 6040 mPas und einen Flammpunkt von 94°C (nach ISO 3679).

Anschließend wurden zu der so erhaltenen, auf 25°C abgekühlten Mischung 25,9g des Siloxans H und 50,4g des Kieselsäurefüllstoffs zugegeben und bei einer Rührgeschwindigkeit von 400 min⁻¹ bei 25°C für weitere 10 Minuten gemischt. Anschließend wurden 22,4g des Silanhydrolysats und 2,8g 3-(2-Aminoethyl)aminopropyltrimethoxysilan zugesetzt und weitere 5 min mit einer Rührgeschwindigkeit von 400 min⁻¹ gemischt.

Schließlich wurden 63,3g des Alkanlösungsmittels zugegeben und weitere 25 Minuten bei vermindertem Druck von 100 hPa gemischt. Dabei erhöhte sich die Temperatur der Mischung von anfänglich 25°C auf 45°C. Diese Mischung wurde zum Schluss in feuchtigkeitsdichte Gebinde abgefüllt. Die Mischung hatte eine Viskosität von 9680 mPas. Die Hautbildungszeit betrug 15 min. Die Klebfreiheit betrug 4 Stunden. Die Zugfestigkeit betrug 0,76 MPa, Die Reißdehnung betrug 200%, die Spannung bei 100% Dehnung betrug 0,43 MPa und die Härte betrug 26 ShoreA.

Die Charakterisierung der Mischung bezüglich ihrer Anti-Graffiti-Eigenschaften erfolgte wie in Beispiel 2 beschrieben. Die Verunreinigungen ließen sich in jedem Fall vollständig beseitigen.

## Patentansprüche

1. Vernetzbare Massen enthaltend
(A) Organosiloxane bestehend aus Einheiten der Formeln
R_{c}SiO_{4-c/2} (I)
und
R⁵(OR⁴)ₘSiO_{3-m/2} (II),
wobei
**R** gleiche oder verschiedene, einwertige, gegebenenfalls substituierte Kohlenwasserstoffreste bedeutet,
**R⁴** gleich oder verschieden sein kann und einwertige, gegebenenfalls substituierte Kohlenwasserstoffreste bedeutet,
**R⁵** eine Gruppe -CH₂-NR²R³ bedeutet,
**R²** Wasserstoffatom oder einen einwertigen, gegebenenfalls substituierten linearen oder verzweigten Kohlenwasserstoffrest mit 1 bis 6 Kohlenstoffatomen bedeutet,
**R³** einen einwertigen, gegebenenfalls substituierten linearen oder verzweigten Kohlenwasserstoffrest mit 1 bis 6 Kohlenstoffatomen oder einen cyclischen gesättigten Kohlenwasserstoffrest mit 5 oder 6 Kohlenstoffatomen oder Phenylrest bedeutet,
**c** gleich 1 oder 2 ist und
**m** gleich 0, 1 oder 2 ist,
mit der Maßgabe, dass pro Molekül mindestens zwei Reste R⁵ sowie mindestens vier Gruppen (OR⁴) anwesend sind,
(B) Silane der Formel
R⁵Si(OR⁴)₃ (III)
und/oder deren Teilhydrolysate
in Mengen von 5 bis 20 Gewichtsteilen, bezogen auf 100 Gewichtsteile Komponente (A),
(C) Organosiloxane bestehend aus Einheiten der Formel
R⁶ₐ(R⁷O)_{b}SiO_{(4-a-b)/2} (IV),
worin
**R⁶** gleich oder verschieden sein kann und einen einwertigen, SiC-gebundenen, gegebenenfalls mit Halogenatom substituierten Kohlenwasserstoffrest oder Si-gebundenes Halogenatom bedeutet, **R⁷** gleich oder verschieden sein kann und einen einwertigen, gegebenenfalls substituierten Kohlenwasserstoffrest bedeutet,
**a** 0 oder 1 ist und
**b** 0, 1, 2 oder 3 ist,
mit der Maßgabe, dass in Formel (IV) die Summe a+b<4 ist, das Organosiloxan 2 bis 30 Einheiten der Formel (IV) aufweist und pro Molekül mindestens eine Einheit mit b verschieden 0 anwesend ist,
in Mengen von 1 bis 30 Gewichtsteilen, bezogen auf 100 Gewichtsteile Komponente (A),
(D) Organosiliciumverbindungen enthaltend Einheiten der Formel
D_{f}Si(OR⁹)ₑR⁸_{d}O_{(4-d-e-f)/2} (V),
worin
**R⁸** gleich oder verschieden sein kann und einen einwertigen, gegebenenfalls substituierten, SiC-gebundenen, von Stickstoff freien organischen Rest bedeutet,
**R⁹** gleich oder verschieden sein kann und Wasserstoffatom oder gegebenenfalls substituierte Kohlenwasserstoffreste bedeutet,
**D** gleich oder verschieden sein kann und einen einwertigen, SiC-gebundenen Rest mit mindestens einem nicht an eine Carbonylgruppe (C=O) gebundenen Stickstoffatom bedeutet,
**d** 0 oder 1, bevorzugt 0, ist,
**e** 0, 1, 2 oder 3 ist und
**f** 0 oder 1 ist,
mit der Maßgabe, dass die Summe aus d+e+f kleiner oder gleich 4 ist, pro Molekül mindestens ein Rest D anwesend ist und pro Molekül mindestens ein Rest D eine NH₂-Gruppe trägt,
in Mengen von 0,1 bis 2 Gewichtsteilen, bezogen auf 100 Gewichtsteile Komponente (A).

2. Vernetzbare Massen gemäß Anspruch 1, **dadurch gekennzeichnet, dass** es sich bei den eingesetzten Siloxanen (A) um solche der Formel
[(R⁴O)₂R⁵SiO-(SiR₂O)ₙ-]ₒ(OR⁴)₂₋ₒR⁵SiO-(SiR₂O)ₙ-SiR⁵(OR⁴)₂₋ₒ[O-(SiR₂O)ₙ -SiR⁵(OR⁴)₂]ₒ (VI)
handelt, wobei
∘ gleich oder verscheiden sein kann und 0, 1 oder 2 bedeutet und
n gleich oder verscheiden sein kann und eine ganze Zahl von 10 bis 600 ist.

3. Vernetzbare Massen gemäß Anspruch 1 oder 2, **dadurch gekennzeichnet, dass** es sich bei Rest R⁵ um N,N-Dimethylaminomethyl-, N,N-Diethylaminomethyl-, N,N-Di-n-propylaminomethyl- oder N,N-Di-n-butylaminomethyl-Reste handelt.

4. Vernetzbare Massen gemäß einem oder mehreren der Ansprüche 1 bis 3, **dadurch gekennzeichnet, dass** es um solche handelt enthaltend
(A) Organosiloxane bestehend aus Einheiten der Formeln (I) und (II), mit der Maßgabe, dass pro Molekül mindestens zwei Reste R⁵ sowie mindestens vier Gruppen (OR⁴) anwesend sind,
(B) Silane der Formel (III) und/oder deren Teilhydrolysate in Mengen von 5 bis 20 Gewichtsteilen, bezogen auf 100 Gewichtsteile Komponente (A),
(C) Organosiloxane bestehend aus Einheiten der Formel (IV), mit der Maßgabe, dass in Formel (IV) die Summe a+b<4 ist, das Organosiloxan 2 bis 30 Einheiten der Formel (IV) aufweist und pro Molekül mindestens eine Einheit mit b verschieden 0 anwesend ist, in Mengen von 1 bis 30 Gewichtsteilen, bezogen auf 100 Gewichtsteile Komponente (A),
(D) Organosiliciumverbindungen enthaltend Einheiten der Formel (V), mit der Maßgabe, dass die Summe aus d+e+f kleiner oder gleich 4 ist, pro Molekül mindestens ein Rest D anwesend ist und pro Molekül mindestens ein Rest D eine NH₂-Gruppe trägt, in Mengen von 0,1 bis 2 Gewichtsteilen, bezogen auf 100 Gewichtsteile Komponente (A),
sowie mindestens eine Komponente ausgewählt aus
(E) organischen Lösungsmitteln,
(F) Füllstoffen,
(G) Pigmenten und
(H) Weichmachern.

5. Verfahren zur Herstellung der vernetzbaren Massen gemäß einem oder mehreren der Ansprüche 1 bis 4 durch Mischen der einzelnen Komponenten in beliebiger Reihenfolge.

6. Verfahren gemäß Anspruch 5, **dadurch gekennzeichnet, dass** zunächst α,ω-Dihydroxypolydimethylsiloxane (A0) mit Silanen der Formel (III) im molaren Überschuss miteinander vermischt und unter Abspaltung des Alkohols R⁴OH mit R⁴ gleich der obengenannten Bedeutung reagieren gelassen werden, wobei eine Mischung aus Organosiloxanen (A) und überschüssigen Silanen der Formel (III) erhalten wird, und zu dieser Mischung dann alle weiteren Komponenten in beliebiger Reihenfolge zugegeben werden.

7. Formkörper, hergestellt durch Vernetzung der Massen gemäß einem oder mehreren der Ansprüche 1 bis 4 oder hergestellt nach Ansprüchen 5 oder 6.

8. Verfahren zur Behandlung von Substraten, bei dem die Massen gemäß einem oder mehreren der Ansprüche 1 bis 4 oder hergestellt nach Ansprüchen 5 oder 6 auf die Substrate aufgebracht und vernetzen gelassen werden.

9. Verfahren gemäß Anspruch 8, **dadurch gekennzeichnet, dass** die vernetzbare Masse in Mengen von 100 bis 400g, bezogen auf 1 m² Substratoberfläche, eingesetzt wird.

10. Verfahren gemäß Anspruch 8 oder 9, **dadurch gekennzeichnet, dass** es sich bei den Substraten um mineralische Stoffe handelt.

## Claims

1. Cross-linkable compositions comprising
(A) organosiloxanes consisting of units of the formulae
R_{c}SiO_{4-c/2} (I)
and
R⁵(OR⁴)ₘSiO_{3-m/2} (II),
where
**R** denotes the same or different monovalent, optionally substituted hydrocarbon radicals,
**R⁴** may be the same or different and denotes monovalent, optionally substituted hydrocarbon radicals,
**R⁵** denotes a group -CH₂-NR²R³,
**R²** denotes a hydrogen atom or a monovalent, optionally substituted linear or branched hydrocarbon radical having 1 to 6 carbon atoms,
**R³** denotes a monovalent, optionally substituted linear or branched hydrocarbon radical having 1 to 6 carbon atoms or a cyclic saturated hydrocarbon radical having 5 or 6 carbon atoms or a phenyl radical,
**c** is 1 or 2 and
**m** is 0, 1 or 2,
with the proviso that at least two R⁵ radicals and at least four (OR⁴) groups are present per molecule,
(B) silanes of the formula
R⁵Si(OR⁴)₃ (III)
and/or partial hydrolysates thereof
in amounts of 5 to 20 parts by weight, based on 100 parts by weight of component(A),
(C) organosiloxanes consisting of units of the formula
R⁶ₐ(R⁷O)_{b}SiO_{(4-a-b)/2} (IV),
where
**R⁶** may be the same or different and denotes a monovalent, SiC-bonded hydrocarbon radical optionally substituted by a halogen atom, or a Si-bonded halogen atom,
**R⁷** may be the same or different and denotes a monovalent, optionally substituted hydrocarbon radical,
**a** is 0 or 1 and
**b** is 0, 1, 2 or 3,
with the proviso that, in formula (IV), the sum of a+b is <4, the organosiloxane has 2 to 30 units of the formula (IV) and at least one unit is present per molecule where b is other than 0,
in amounts of 1 to 30 parts by weight, based on 100 parts by weight of component (A),
(D) organosilicon compounds comprising units of the formula
D_{f}Si(OR⁹)ₑR⁸_{d}O_{(4-d-e-f)/2} (V),
where
**R⁸** may be the same or different and denotes a monovalent, optionally substituted SiC-bonded organic radical free of nitrogen,
**R⁹** may be the same or different and denotes a hydrogen atom or optionally substituted hydrocarbon radicals,
**D** may be the same or different and denotes a monovalent, SiC-bonded radical having at least one nitrogen atom that is not bonded to a carbonyl group (C=O),
**d** is 0 or 1, preferably 0,
**e** is 0, 1, 2 or 3 and
**f** is 0 or 1,
with the proviso that the sum of d+e+f is less than or equal to 4, at least one radical D is present per molecule and at least one radical D bears an NH₂ group per molecule,
in amounts of 0.1 to 2 parts by weight, based on 100 parts by weight of component (A).

2. Cross-linkable compositions according to Claim 1, **characterized in that** the siloxanes (A) used are those of the formula
[(R⁴O)₂R⁵SiO-(SiR₂O)ₙ-]ₒ(OR⁴)₂₋ₒR⁵SiO-(SiR₂O)ₙ-SiR⁵(OR⁴)_{2- o}[O-(SiR₂O)ₙ-SiR⁵(OR⁴)₂]ₒ (VI)
where
∘ may be the same or different and denotes 0, 1 or 2 and
n may be the same or different and is an integer from 10 to 600.

3. Cross-linkable compositions according to Claim 1 or 2, **characterized in that** the radical R⁵ is N,N-dimethylaminomethyl, N,N-diethylaminomethyl, N,N-di-n-propylaminomethyl or N,N-di-n-butylaminomethyl radicals.

4. Cross-linkable compositions according to one or more of Claims 1 to 3, **characterized in that** it is those comprising
(A) organosiloxanes consisting of units of the formulae (I) and (II), with the proviso that at least two R⁵ radicals and at least four (OR⁴) groups are present per molecule,
(B) silanes of the formula (III) and/or partial hydrolysates thereof in amounts of 5 to 20 parts by weight, based on 100 parts by weight of component (A),
(C) organosiloxanes consisting of units of the formula (IV), with the proviso that, in formula (IV), the sum of a+b is <4, the organosiloxane has 2 to 30 units of the formula (IV) and at least one unit is present per molecule where b is other than 0,
in amounts of 1 to 30 parts by weight, based on 100 parts by weight of component (A),
(D) organosilicon compounds comprising units of the formula (V), with the proviso that the sum of d+e+f is less than or equal to 4, at least one radical D is present per molecule and at least one radical D bears an NH₂ group per molecule,
in amounts of 0.1 to 2 parts by weight, based on 100 parts by weight of component (A),
and also at least one component selected from
(E) organic solvents,
(F) fillers,
(G) pigments and
(H) plasticizers.

5. Process for producing cross-linkable compositions according to one or more of Claims 1 to 4 by mixing the individual components in any sequence.

6. Process according to Claim 5, **characterized in that** firstly α,ω-dihydroxypolydimethylsiloxanes (A0) are mixed together with silanes of the formula (III) in molar excess and are left to react with elimination of the alcohol R⁴OH, where R⁴ has the same definition specified above, wherein a mixture of organosiloxanes (A) and excess silanes of the formula (III) is obtained, and then any further components are added to this mixture in any desired sequence.

7. Molding, produced by cross-linking the compositions according to one or more of Claims 1 to 4 or produced according to Claims 5 or 6.

8. Process for treating substrates, in which the compositions according to one or more of Claims 1 to 4 or produced according to Claims 5 or 6 are applied to the substrates and are left to cross-link.

9. Process according to Claim 8, **characterized in that** the cross-linkable composition is used in amounts from 100 to 400 g, based on 1 m² of substrate surface area.

10. Process according to Claim 8 or 9, **characterized in that** the substrates are mineral substances.

## Revendications

1. Matières réticulables, contenant :
(A) des organosiloxanes constitués par des unités des formules :
R_{c}SiO_{4-c/2} (I)
et
R⁵(OR⁴)ₘSiO_{3-m/2} (II)
dans lesquelles
les **R** signifient des radicaux hydrocarbonés monovalents, éventuellement substitués, identiques ou différents,
les **R⁴** peuvent être identiques ou différents, et signifient des radicaux hydrocarbonés monovalents, éventuellement substitués,
**R⁵** signifie un groupe -CH₂-NR²R³,
**R²** signifie un atome d'hydrogène ou un radical hydrocarboné monovalent linéaire ou ramifié, éventuellement substitué, de 1 à 6 atomes de carbone,
**R³** signifie un radical hydrocarboné monovalent linéaire ou ramifié, éventuellement substitué, de 1 à 6 atomes de carbone, ou un radical hydrocarboné saturé cyclique à 5 ou 6 atomes de carbone, ou un radical phényle,
**c** signifie 1 ou 2, et
**m** signifie 0, 1 ou 2,
à condition qu'au moins deux radicaux R⁵ et au moins quatre groupes (OR⁴) soient présents par molécule,
(B) des silanes de formule :
R⁵Si(OR⁴)₃ (III)
et/ou leurs hydrolysats partiels,
en quantités de 5 à 20 parties en poids, par rapport à 100 parties en poids du composant (A),
(C) des organosiloxanes constitués par des unités de formule :
R⁶ₐ(R⁷O)_{b}SiO_{(4-a-b)/2} (IV)
dans laquelle
les **R⁶** peuvent être identiques ou différents, et signifient un radical hydrocarboné monovalent, relié à SiC, éventuellement substitué avec un atome d'halogène, ou un atome d'halogène relié à Si,
les **R⁷** peuvent être identiques ou différents, et signifient un radical hydrocarboné monovalent, éventuellement substitué,
**a** signifie 0 ou 1, et
**b** signifie 0, 1, 2 ou 3,
à condition que la somme a+b < 4 dans la formule (IV), que l'organosiloxane comprenne 2 à 30 unités de formule (IV), et qu'au moins une unité avec b différent de 0 soit présente par molécule,
en quantités de 1 à 30 parties en poids, par rapport à 100 parties en poids du composant (A),
(D) des composés d'organosilicium contenant des unités de formule :
D_{f}Si(OR⁹)ₑR⁸_{d}O_{(4-d-e-f)/2} (V)
dans laquelle
les **R⁸** peuvent être identiques ou différents, et signifient un radical organique monovalent, éventuellement substitué, relié à SiC, exempt d'azote,
les **R⁹** peuvent être identiques ou différents, et signifient un atome d'hydrogène ou des radicaux hydrocarbonés éventuellement substitués,
les **D** peuvent être identiques ou différents, et signifient un radical monovalent, relié à SiC, contenant au moins un atome d'azote non relié à un groupe carbonyle (C=O),
**d** signifie 0 ou 1, de préférence 0,
**e** signifie 0, 1, 2 ou 3, et
**f** signifie 0 ou 1,
à condition que la somme de d+e+f soit inférieure ou égale à 4, qu'au moins un radical D soit présent par molécule et qu'au moins un radical D porte un groupe NH₂ par molécule,
en quantités de 0,1 à 2 parties en poids, par rapport à 100 parties en poids du composant (A).

2. Matières réticulables selon la revendication 1, **caractérisées en ce que** les siloxanes (A) utilisés sont de formule :
[(R⁴O)₂R⁵SiO-(SiR₂O)ₙ-]ₒ(OR⁴)₂₋ₒR⁵SiO-(SiR₂O)ₙ-SiR⁵(OR⁴)₂- ₒ[O-(SiR₂O)ₙ-SiR⁵(OR⁴)₂]ₒ (VI)
dans laquelle
les o peuvent être identiques ou différents, et signifient 0, 1 ou 2, et
les n peuvent être identiques ou différents, et signifient un nombre entier de 10 à 600.

3. Matières réticulables selon la revendication 1 ou 2, **caractérisées en ce que** le radical R⁵ est un radical N,N-diméthylaminométhyle, N,N-diéthylaminométhyle, N,N-di-n-propylaminométhyle ou N,N-di-n-butylaminométhyle.

4. Matières réticulables selon une ou plusieurs des revendications 1 à 3, **caractérisées en ce qu'**il s'agit de matières contenant :
(A) des organosiloxanes constitués par des unités des formules (I) et (II), à condition qu'au moins deux radicaux R⁵ et au moins quatre groupes (OR⁴) soient présents par molécule,
(B) des silanes de formule (III) et/ou leurs hydrolysats partiels en quantités de 5 à 20 parties en poids, par rapport à 100 parties en poids du composant (A),
(C) des organosiloxanes constitués par des unités de formule (IV), à condition que la somme a+b < 4 dans la formule (IV), que l'organosiloxane comprenne 2 à 30 unités de formule (IV) et qu'au moins une unité avec b différent de 0 soit présente par molécule, en quantités de 1 à 30 parties en poids, par rapport à 100 parties en poids du composant (A),
(D) des composés d'organosilicium contenant des unités de formule (V), à condition que la somme de d+e+f soit inférieure ou égale à 4, qu'au moins un radical D soit présent par molécule et qu'au moins un radical D porte un groupe NH₂ par molécule, en quantités de 0,1 à 2 parties en poids, par rapport à 100 parties en poids du composant (A),
ainsi qu'au moins un composant choisi parmi :
(E) les solvants organiques,
(F) les charges,
(G) les pigments et
(H) les plastifiants.

5. Procédé de fabrication des matières réticulables selon une ou plusieurs des revendications 1 à 4 par mélange des composants individuels dans un ordre quelconque.

6. Procédé selon la revendication 5, **caractérisé en ce que** des α,ω-dihydroxypolydiméthylsiloxanes (A0) sont tout d'abord mélangés avec des silanes de formule (III) en excès molaire et laissés réagir avec clivage de l'alcool R⁴OH avec R⁴ ayant la signification susmentionnée, un mélange d'organosiloxanes (A) et de silanes de formule (III) en excès étant obtenu, et tous les autres composants sont ensuite ajoutés à ce mélange dans un ordre quelconque.

7. Corps moulé, fabriqué par réticulation des matières selon une ou plusieurs des revendications 1 à 4 ou fabriquées selon la revendication 5 ou 6.

8. Procédé de traitement de substrats, selon lequel les matières selon une ou plusieurs des revendications 1 à 4 ou fabriquées selon la revendication 5 ou 6 sont appliquées sur les substrats et laissées réticuler.

9. Procédé selon la revendication 8, **caractérisé en ce que** la matière réticulable est utilisée en quantités de 100 à 400 g, par rapport à 1 m² de surface de substrat.

10. Procédé selon la revendication 8 ou 9, **caractérisé en ce que** les substrats sont des substances minérales.
